Europäisches Patentamt

European Patent Office

Office européen des brevets

(11) Veröffentlichungsnummer: **0 298 266 B1**

(12) **EUROPÄISCHE PATENTSCHRIFT**

(45) Veröffentlichungstag der Patentschrift: **21.10.92**

(21) Anmeldenummer: **88109158.1**

(22) Anmeldetag: **08.06.88**

(51) Int. Cl.5: **F16F  13/00**

(54) **Fluidgefülltes Gummilager.**

(30) Priorität: **07.07.87 DE 3722376**

(43) Veröffentlichungstag der Anmeldung:
**11.01.89 Patentblatt  89/02**

(45) Bekanntmachung des Hinweises auf die
Patenterteilung:
**21.10.92 Patentblatt  92/43**

(84) Benannte Vertragsstaaten:
**DE FR GB IT**

(56) Entgegenhaltungen:
**EP-A- 0 261 427**
**DE-A- 3 336 965**
**DE-A- 3 519 016**
**DE-C- 935 831**

**PATENT ABSTRACTS OF JAPAN, Band 10,
Nr. 73 (M-463)[2130]. 22. März 1986; & JP-A-60
215 135 (MAZDA K.K.) 28-10-1985**

**PATENT ABSTRACTS OF JAPAN, Band 9, Nr.
326 (M-441)[2049], 21. Dezember 1985; & JP-
A-60 159 436 (TOUKAI GOMU KOGYO K.K.)
20-08-1985**

**PATENT ABSTRACTS OF JAPAN, Band 9, Nr.
303 (M-434)[2026], 30. November 1985; & JP-**

**A-60 139 508 (NISSAN JIDOSHA K.K.)
24-07-1985**

(73) Patentinhaber: **Bayerische Motoren Werke Aktiengesellschaft
Patentabteilung AJ-30 Postfach 40 02 40 Petuelring 130
W-8000 München 40(DE)**

(72) Erfinder: **Rampf, Willy
Am Marienbach 14
W-8059 Thalheim(DE)**
Erfinder: **Manseicher, Josef
Freischützstrasse 84
W-8000 München 81(DE)**

## Beschreibung

Die Erfindung betrifft ein fluidgefülltes Gummilager, mit den im Oberbegriff des Patentanspruches 1 angegebenen Merkmalen.

Ein derartiges fluidgefülltes Gummilager ist bereits durch die DE-A-3519 016 bekannt, das zwischen einem rohrförmigen Innenteil und einem dazu konzentrischen rohrförmigen Außenteil zwei mit Abstand nebeneinander angeordnete Gummikörper aufweist. Im Inneren des fluidgefüllten Gummilagers ist ein Trennkörper angeordnet, der zwischen einer starren Innenbuchse und einer starren, mit dem Außenteil verbundenen Außenbuchse ein Gummielement vorsieht. Durch einen die beiden Kammern verbindenden Kanal in der Innenbuchse ist eine Drossel gebildet, die ein vorgegebenes Dämpfungsverhalten bewirkt. Die äußeren Gummikörper und das Gummielement des Trennkörpers ermöglichen eine axiale und radiale Belastung des Gummilagers, wobei auch bei kardanischen Auslenkungen der Querschnitt der Drossel konstant bleibt. Besonders nachteilig ist, daß bei diesem Gummilager eine aktive Beeinflussung der Federsteifigkeit und der durch die Drossel bewirkten Dämpfung nicht möglich ist.

Aus der DE-A-3336 965 ist ein von einer Zwischenplatte in zwei Kammern unterteiltes Motorlager bekannt. Zur hydraulischen Dämpfung weist die Zwischenplatte einen Kanal auf, durch den Flüssigkeit von einer Kammer in die andere Kammer gedrosselt strömen kann. Die Flüssigkeit weist eine Viskosität auf, die durch Anlegen eines elektrischen Feldes im Bereich des Kanals veränderbar ist. Auf diese Weise kann das Dämpfungsverhaltens des Motorlagers aktiv verändert werden. Eine gezielte Beeinflussung der Elastizität des Lagers ist damit nicht möglich. Ein weiterer Nachteil ist, daß das Motorlager mit zunehmender Dämpfung dynamisch verhärtet und dadurch Schwingungen oder Geräusche überträgt.

Das in der JP-A-60 215 135 angegebene Gummilager bildet mit einem inneren stangenförmigen Lagerteil, einem äußeren rohrförmigen Lagerteil und zwei axial gegenüberliegenden Gummikörpern einen mit Dämpfungsöl gefüllten Hohlkörper. In dem Hohlkörper ist ein elastisches Gummielement mit dem inneren Lagerteil verbunden, das den Hohlraum des Hohlkörpers in zwei Kammern trennt, die über eine axiale Durchtrittsöffnung in dem Gummielement verbunden sind. Der Querschnitt der Durchtrittsöffnung ist so bemessen, daß bei einer axialen Belastung eines Lagerteiles Dämpfungsöl gedrosselt durch die Durchtrittsöffnung strömen kann und dadurch eine frequenzabhängige Dämpfungskraft bewirkt. Die Elastizität des Lagers bleibt dabei unverändert.

Ein ähnliches Gummilager ist in der JP-A-60 159 436 beschrieben, das ebenfalls keine Änderung der Lagerelastizität vorsieht.

Bei dem in der JP-A-60 139 508 beschriebenen Gummilager ist in einem fluidgefüllten Hohlraum ein elastischer Anschlagkörper vorgesehen, der den Hohlraum in zwei radial gegenüberliegende Kammern trennt. Die beiden Kammern sind über axiale und radiale Öffnungen in dem Anschlagkörper zu verbinden, wobei in der radialen Öffnung ein Ventil angeordnet ist. Dieses Ventil wird über den Druck einer durch eine radiale Nut im Außenumfang des Innenzylinders gebildeten Verbindungsleitung angesteuert, wodurch sich der Querschnitt der radialen Öffnung entsprechend verändert. Durch diese Querschnittsänderung der radialen Öffnung im Anschlagkörper ist lediglich die Dämpfung des Gummilagers und damit seine dynamische Federrate anzupassen, jedoch nicht die Elastizität des Gummilagers zu verändern. Die Elastizität des Gummilagers verändert sich erst, wenn das Gummilager über ein vorgegebenes Maß radial einfedert, wodurch der Außenumfang des Anschlagkörpers am Innenumfang des Außenzylinders zur Anlage kommt und den Anschlagkörper elastisch verformt. Diese zusätzliche Elastizität des Anschlagkörpers ist nicht beliebig zu- oder abschaltbar, sondern hängt ausschließlich von dem Grad der radialen Einfederung des Gummilagers ab. Das für eine vorwiegend radiale Belastung vorgesehene Gummilager ist außerdem aufwendig zu fertigen.

Aufgabe der Erfindung ist es, ein fluidgefülltes Gummilager nach dem Oberbegriff des Patentanspruchs 1 anzugeben, das eine willkürliche Veränderung der Elastizität des Gummilagers ermöglicht. Darüber hinaus soll die Elastizität des Gummilagers schnell veränderlich und auf einfache Weise steuerbar sein.

Diese Aufgabe ist dadurch gelöst, daß die Elastizität des Gummilagers durch eine die Leitung sperrende oder freigebende Steuereinrichtung veränderbar ist, wobei das Gummielement bei einer äußeren seitlichen Belastung eines Lagerteiles zumindest bei gesperrter Leitung elastisch verformt und bei vollständig freigegebener Leitung nahezu nicht verformt wird. Besonders vorteilhaft ist, daß lediglich die Leitung zu sperren oder freizugeben ist, um die Gesamtfedersteifigkeit des Gummilagers zu verändern. Bei vollständig offener Leitung weist das Gummilager eine den beiden äußeren Gummikörpern entsprechende Gesamtfedersteifigkeit auf, da in diesem Fall das innere Gummielement nahezu nicht verformt wird. Demgegenüber weist das Gummilager eine den beiden Gummikörpern und dem Gummielement entsprechende Gesamtfedersteifigkeit auf, wenn die Leitung gesperrt ist. Ein weiterer Vorteil ist darin zu sehen, daß die Leitung auch lediglich verengt werden kann, wodurch sich zwar nicht die Elastizität des Gummilagers, jedoch seine Dämpfung und seine dynamische Federrate verändert. Die dynamische Federrate wird dabei nicht nur von den beiden äußeren Gummikörpern und der durch die gedrosselte Strömung durch die Leitung bewirkten Dämpfung bestimmt, sondern auch von dem Gummielement, da dieses aufgrund der reibungsbehafteten Strömung in der Leitung entsprechend elastisch verformt wird.

Vorteilhafte Ausgestaltungen der Erfindung sind Gegenstand von Unteransprüchen.

Zwei Ausführungsbeispiele der Erfindung werden anhand einer Zeichnung näher erläutert. Es zeigen

Fig. 1   ein erstes Ausführungsbeispiel eines mit einer elektroviskosen Flüssigkeit gefüllten, in einem Längsschnitt dargestellten Gummilagers,

Fig. 2   eine Fig. 1 entsprechende Ansicht mit anders angeordneten Elektroden,

Fig. 3   ein zweites Ausführungsbeispiel mit nach außen geführter Leitung zur Verbindung der beiden Kammern,

Fig. 4   ein in der Leitung von Fig. 3 angeordnetes Stellglied und

Fig. 5   eine zu dem Stellglied gemäß Fig. 4 alternativ verwendbare Drossel, die im Querschnitt regelbar ist.

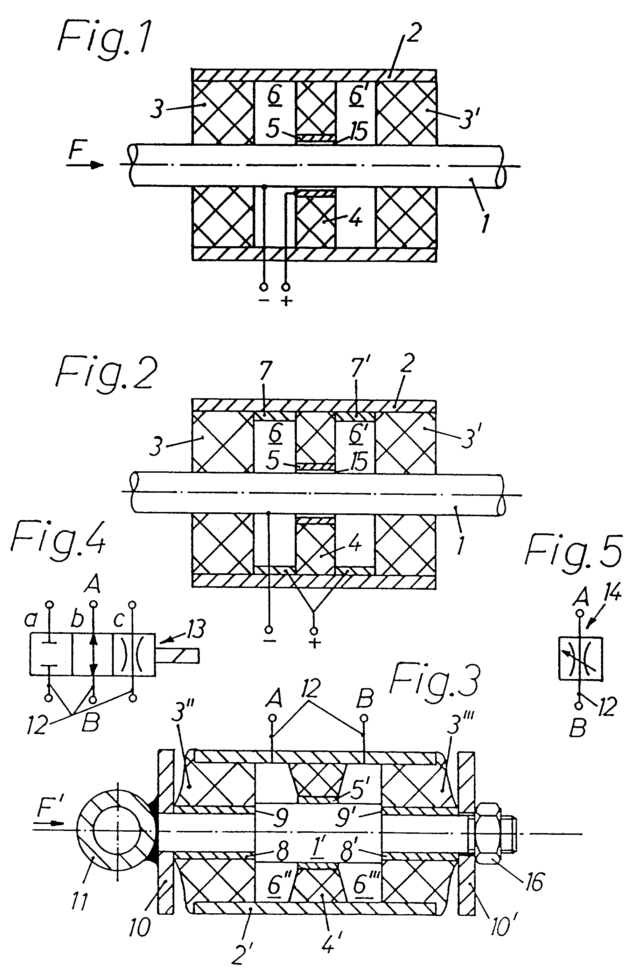

Das in Figur 1 in einem Längsschitt dargestellte Gummilager weist ein inneres, stangenförmiges Lagerteil 1 und ein äußeres, rohrförmiges Lagerteil 2 auf, das zu dem inneren Lagerteil 1 koaxial angeordnet ist. An beiden seitlichen Bereichen am Innenumfang des äußeren Lagerteiles 2 ist jeweils ein ringförmiger Gummikörper 3, 3' befestigt, der an seiner Innenseite beispielsweise durch Vulkanisation mit dem inneren Lagerteil 1 verbunden ist. Die beiden Lagerteile 1, 2 und die beiden Gummikörper 3, 3' schließen einen Hohlraum ein, der mit einer elektroviskosen Flüssigkeit gefüllt ist. Etwa in Seitenmitte des Hohlraumes ist ein scheibenförmiges Gummielement 4 angeordnet, das den Hohlraum in zwei Kammern 6, 6' unterteilt. Bei dem Ausführungsbeispiel ist das Gummielement 4 mit seinem Außenumfang am Innenumfang des äußeren Lagerteiles 2 anvulkanisiert. Ebenso könnte das Gummielement 4 auf andere Weise an dem äußeren Lagerteil 2 befestigt sein. Es ist auch möglich, daß das Gummielement 4 nicht mit dem äußeren Lagerteil 2, sondern an seinem Innenumfang mit dem inneren Lagerteil 1 verbunden ist. Der innere Bereich des Gummielements 4 ist durch eine Buchse 5 verstärkt, die mit ihrer Innenseite und einem äußeren Bereich des inneren Lagerteiles 1 einen Ringkanal 15 bildet. Durch den Ringkanal 15 ist eine Leitung zur Verbindung der Kammern 6, 6' gebildet, durch die Flüssigkeit von einer Kammer 6, 6' in die andere Kammer 6, 6' strömen kann, wenn ein Lagerteil 1, 2 des Gummilagers durch eine äußere seitliche Kraft gegenüber dem anderen Teil 1, 2 axial verschoben wird. Das radial und axial elastische Gummilager dient bei dem Ausführungsbeispiel vorwiegend zur Aufnahme axialer Kräfte. Auch bei kardanischen Auslenkungen ist durch die steife Buchse 5 ein etwa gleichbleibender Querschnitt der durch den Ringkanal 15 gebildeten Leitung sichergestellt. Das innere Lagerteil 1 und die Buchse 5 sind als stromleitende Elektroden ausgebildet. Bei dem Ausführungsbeispiel ist das innere Lagerteil 1 mit dem Minuspol und die Buchse 5 mit dem Pluspol einer nicht dargestellten Gleichsparrungsquelle verbunder. Um eine stromleitende Verbindung zwischen dem inneren Lagerteil 1 und der Buchse 5 bei radialen und kardanischen Lagerbelastungen zu vermeiden, kann die Oberfläche des inneren Lagerteiles 1 oder die Innenseite der Buchse 5 mit einer Isolierschicht versehen sein. Die Buchse 5 kann auch durch zwei ineinandergesteckte Hülsen oder dergleichen gebildet sein, von denen die äußere Hülse stromleitend ausgebildet und mit der Gleichspannungsquelle verbunden ist, während die innere Hülse aus einem stromisolierenden Material besteht. Wird z. B. das innere Lagerteil aufgrund einer äußeren Kraft in Richtung des Pfeiles F axial verschoben, so kann die elektroviskose Flüssigkeit von der Kammer 6 ungehindert in die Kammer 6' strömen, solange das innere Lagerteil 1 und die Buchse 5 nicht mit der Gleichspannungsquelle einer Steuereinheit verbunden sind. In diesem Fall ist die Elastizität des Gummilagers durch die beiden Gummikörper 3, 3' bestimmt, da sich das Gummielement 4 nahezu nicht verformt. Wird jedoch von der Gleichspannungsquelle eine vorgegebene Maximalspannung an das innere Lagerteil 1 und die Buchse 5 angelegt, so ändert sich die Viskosität der elektroviskosen Flüssigkeit in Folge des entstehenden elektrischen Feldes derart, daß die Flüssigkeit nicht mehr durch den Ringspalt von einer Kammer 6, 6' in die andere Kammer 6, 6' strömen kann. Dadurch wird bei der erwähnten Verschiebung des inneren Lagerteiles 1 auch das Gummielement 4 elastisch verformt. Die Elastizität des Gummilagers ist somit durch die beiden Gummikörper 3, 3' und das Gummielement 4 bestimmt. Wird an das innere Lagerteil 1 und die Buchse 5 eine gegenüber der Maximalspannung geringere Gleichspannung angelegt, so weist die elektroviskose Flüssigkeit eine von dieser Gleichspannung abhängige Viskosität auf. Diese Viskosität ist jedoch gegenüber der Viskosität bei Maximalspannung geringer, so daß die Flüssigkeit von einer Kammer 6, 6' in die andere Kammer 6, 6' gedrosselt strömen kann. Durch die reibungsbehaftete Strömung im Ringspalt wird das Gummielement 4 in Abhängigkeit von der Strömungsgeschwindigkeit elastisch verformt. Durch das Anliegen einer gegenüber der Maximalspannung geringeren Gleichspannung kann somit die dynamische Federrate des Gummilagers verändert werden. Die Elastizität des Gummilagers entspricht in diesem Fall im wesentlichen der Elastizität der beiden Gummikörper 3, 3'.

Das in Figur 2 abgebildete Gummilager entspricht dem Gummilager gemäß Figur 1. Bei diesem Gummilager ist jedoch die zweite Elektrode nicht durch die Buchse 5, sondern durch zwei zylinderförmige Ringelemente 7, 7' gebildet, von denen jeweils ein Ringelement 7, 7' im äußeren Bereich einer Kammer 6, 6' an das äußere Lagerteil 2 angrenzend angeordnet ist.

In Figur 3 ist ein zweites Ausführungsbeispiel dargestellt, das ein stangenförmiges inneres Lagerteil 1' und ein dazu konzentrisch außen angeordnetes, rohrförmiges Lagerteil 2' aufweist. An den beiden seitlichen Bereichen des Lagerteiles 2' ist am Innenumfang wie bei dem ersten Ausführungsbeispiel ein ringförmiger Gummikörper 3'', 3''' befestigt. Bei diesem Ausführungsbeispiel weisen die beiden Gummikörper 3'', 3''' jeweils an ihrer Innenseite ein Rohrteil 8, 8' auf. Jedes Rohrteil 8, 8' ist an einem Absatz 9, 9' des inneren Lagerteiles 1' stirnseitig anliegend an dem inneren Lagerteil 1' befestigt. Dies kann wie auf der rechten Seite der Abbildung dargestellt über eine stirnseitig auf das innere Lagerteil 1' aufschraubbare Gewindemutter 16 erfolgen, die das Rohrteil 8' beispielsweise unter Zwischenlage einer Scheibe 10' zu dem Absatz 9' belastet. Die Befestigung der Rohrteile 8, 8' an dem inneren Lagerteil 1' kann aber auch anders beispielsweise wie auf der linken Seite der Abbildung über ein Befestigungselement 11 erfolgen, das unter Zwischenlage einer an dem Rohrteil 8 anliegenden Scheibe 10 stirnseitig an dem inneren Lagerteil 1' und an der Scheibe 10 angeschweißt oder auf andere Weise befestigt ist. Die beiden Lagerteile 1', 2' und die beiden Gummikörper 3'', 3''' schließen einen Hohlraum ein, der mit einer Flüssigkeit vorgegebener Viskosität gefüllt ist. Etwa in Seitenmitte des Hohlraumes ist ein etwa scheibenförmiges Gummielement 4' angeordnet, das den Hohlraum in zwei voneinander getrennte Kammern 6'', 6''' unterteilt. Bei diesem Ausführungsbeispiel ist das Gummielement 4' an seiner Außenseite mit der Innenseite des äußeren Lagerteiles 2' verbunden und an der Innenseite mit einer Buchse 5' versehen, die auf dem inneren Lagerteil 1' axial verschiebbar ist. Die Buchse 5' ist im Innendurchmesser an den Außendurchmesser des inneren Lagerteiles 1' angepaßt, so daß kein die Kammern 6'', 6''' verbindender Spalt gebildet ist. Die beiden Kammern 6'', 6''' sind über eine äußere Leitung 12 verbindbar, die in der Figur Leitungsanschlüsse A und B aufweist.

Zwischen den Leitungsanschlüssen A und B der Leitung 12 in Figur 3 kann das in Figur 4 abgebildete Stellglied 13 angeordnet werden. Das von einer Steuereinrichtung verstellbare Stellglied 13 weist eine Stellung a auf, in der die Leitung 12 unterbrochen ist. Ein Flüssigkeitsaustausch zwischen den beiden Kammern 6, 6' des Gummilagers gemäß Figur 3 ist nicht möglich, so daß das Gummielement 4' bei einer axialen Belastung des Gummilagers in Pfeilrichtung F' elastisch verformt wird. Die Elastizität des Lagers gemäß Figur 3 entspricht in diesem Fall den Elastizitäten der beiden Gummikörper 3'', 3''' und des Gummielements 4'. Wird das Stellglied 13 in Figur 4 in die Stellung b gebracht, so ist die Leitung 12 vollständig geöffnet. Die Elastizität des Gummilagers in Figur 3 entspricht somit den beiden äußeren Gummikörpern 3'', 3''', da durch den Druckausgleich zwischen den beiden Kammern 6'', 6''' das mit seiner Buchse 5'' axial auf dem inneren Lagerteil 1' gleitende Gummielement 4' nahezu nicht verformt wird. Die Elastizität des Gummilagers entspricht ebenfalls im wesentlichen den Elastizitäten der beiden Gummikörper 3'', 3''', wenn das Stellglied 13 in Figur 4 in Stellung c gebracht ist. In dieser Stellung befindet sich eine Drossel in der Leitung 12, die den Querschnitt der Leitung 12 verengt. Auf diese Weise kann die Flüssigkeit nur gedrosselt durch die Leitung 12 strömen, so daß sich zwischen den beiden Kammern 6, 6' des belasteten Gummilagers von Figur 3 eine Druckdifferenz einstellt, die eine elastische axiale Verlagerung des Gummielements 4' bewirkt. Durch eine Verlagerung des Stellgliedes 13 in Figur 4 von Stellung a nach Stellung b und umgekehrt kann somit die Elastizität des Gummilagers von Figur 3 verändert werden, während eine Verlagerung des Stellgliedes 13 aus der Stellung a oder b in die Stellung c und umgekehrt die dynamische Federrate des Gummilagers verändert.

Die in Figur 5 dargestellte, von einer Steuereinrichtung regelbare Drossel 14 kann anstelle des Stellgliedes 13 von Figur 4 in der Leitung 12 des Gummilagers von Figur 3 verwendet werden. Mit der Drossel 14 kann die Leitung 12 abgesperrt oder vollständig geöffnet werden, so daß die Flüssigkeit entweder nicht oder ungehindert durch die Leitung 12 strömen kann. Gegenüber dem Stellglied 13 von Figur 4 weist die Drossel 14 den Vorteil auf, daß die Drossel 14 auf den Querschnitt der Leitung verengende Zwischenstellungen einstellbar ist. Im übrigen wirkt die Drossel 14 wie das Stellglied 13 von Figur 4.

In einer Abänderung des in Figur 3 dargestellten Gummilagers bildet die Innenseite der Buchse 5'' zusammen mit einem Bereich der Außenfläche des inneren Lagerteiles 1' einen Ringkanal, der die beiden Kammern 6'', 6''' verbindet. In diesem Fall ist die Buchse 5″ radial elastisch ausgebildet. Sie kann unter der Kraft einer die Buchse 5″ ringförmig umgebenden Druckleitung oder eines durch stromdurchflossene Spulen erzeugten Magnetfeldes verformt werden, um die durch den Ringspalt gebildete Leitung zu verengen oder zu schließen. Wird keine derartige Kraft auf die Buchse 5″ ausgeübt, so kann durch den Ringspalt ungehindert Flüssigkeit von einer Kammer 6″, 6‴ in die andere Kammer 6″, 6‴ strömen. Eine äußere Leitung 12 ist bei diesem abgeänderten Gummilager nicht vorhanden. Im Verhalten entspricht dieses Lager dem Gummilager von Figur 3, wenn bei diesem in der Leitung 12 die Drossel 14 von Figur 5 angeordnet ist.

Die bei den Ausführungsbeispielen verwendete Steuereinrichtung zur Steuerung der Spannung der Gleichspannungsquelle in den Figuren 1 und 2, bzw. zur Betätigung des Stellgliedes von Figur 4 oder der Drossel von Figur 5, verändert die Elastizität des Gummilagers in Abhängigkeit von der Fahrgeschwindigkeit, der Beladung und der beim Bremsen oder Beschleunigen auftretenden Belastung des Fahrzeugs. Anstelle eines Gummielements können in dem Hohlraum eines Gummilagers auch mehrere, mit Abstand nebeneinander angeordnete Gummielemente vorgesehen sein, die den Hohlraum in eine entsprechende Anzahl von Kammern unterteilen, von denen jeweils zwei benachbarte Kammern über eine Leitung verbunden sind. Auf diese Weise kann die Gesamtelastizität des Gummilagers stufenweise verändert werden, wenn eine entsprechende Anzahl von Gummielementen durch Sperren oder Öffnen der jeweiligen Leitungen zu- oder abgeschaltet wird. Der Energiebedarf zum Ansteuern der Stellglieder ist gering und kann von den Bewegungen des Gummilagers aufgebracht werden, so daß keine Fremdenergieversorgung erforderlich ist. Bei den Ausführungsbeispielen sind die äußeren Gummikörper 3, 3′, 3″, 3‴ niedrigdämpfend und das innere Gummieelement 4, 4′ hochdämpfend ausgebildet.

**Patentansprüche**

1. Fluidgefülltes Gummilager, mit einem inneren stangenförmigen Lagerteil (1, 1') und einem das innere Lagerteil (1, 1') mit Abstand umgebenden äußeren rohrförmigen Lagerteil (2, 2'), und die Lagerteile (1 und 2, bzw. 1' und 2') zusammen mit zwei äußeren, zwischen den Lagerteilen (1 und 2, bzw. 1' und 2') axial gegenüberliegend angeordneten Gummikörpern (3 und 3', bzw. 3" und 3'") einen Hohlraum einschließen, der mit einem Fluid gefüllt ist und der von einem mit einem Lagerteil (2, 2') verbundenen Gummielement (4, 4') in zwei Kammern (6 und 6', bzw. 6" und 6'") unterteilt ist, die über eine Leitung (12, Ringkanal 15) verbunden sind, dadurch gekennzeichnet, daß die Elastizität des Gummilagers durch eine die Leitung (12, Ringkanal 15) sperrende oder freigebende Steuereinrichtung veränderbar ist, wobei das bei einer äußeren axialen Belastung eines Legerteiles (1, 1', 2, 2') schubbeanspruchte Gummielement (4, 4') bei gesperrter Leitung (12, Ringkanal 15) zusammen mit den Gummikörpern (3 und 3', bzw. 3" und 3'") elastisch verformt und bei vollständig freigegebener Leitung (12, Ringkanal 15) und elastisch verformten Gummikörpern (3 und 3', bzw. 3" und 3'") nahezu nicht elastisch verformt ist.

2. Fluidgefülltes Gummilager nach Anspruch 1, dadurch gekennzeichnet, daß in dem Hohlraum zwei Elektroden (Lagerteil 1, Buchse 5, Ringelement 7, 7') der Steuereinrichtung angeordnet und mit je einem Pol einer Gleichspannungsquelle verbunden sind, und das Fluid eine elektroviskose Flüssigkeit ist, die ihre Viskosität in Abhängigkeit von der elektrischen Spannung der Gleichspannungsquelle derart verändert, daß die Flüssigkeit die Leitung (15) bei hoher Viskosität nicht und bei niedriger Viskosität nahezu reibungsfrei durchströmen kann.

3. Fluidgefülltes Gummilager nach Anspruch 1, mit einem zum inneren Lagerteil konzentrischen äußeren Lagerteil und einer Leitung, die durch einen Ringkanal zwischen der Innenseite einer inneren Buchse des Gummielements und einem äußeren Bereich des inneren Lagerteiles gebildet ist, dadurch gekennzeichnet, daß eine Elektrode durch das innere Lagerteil (1) und die andere Elektrode durch die Buchse (5) oder zwei zylinderförmige Ringelemente (7, 7') gebildet ist, von denen jeweils ein Ringelement (7, 7') im äußeren Bereich einer Kammer (6, 6') an das äußere Lagerteil (2) angrenzend angeordnet ist.

4. Fluidgefülltes Gummilager nach Anspruch 1, dadurch gekennzeichnet, daß das Gummielement (4') gleitend an dem anderen Lagerteil (1') anliegt und die beiden Kammern trennt und daß außerhalb des Gummilagers ein Stellglied (13, Drossel 14) vorgesehen ist, das die Leitung (12) in einer Stellung des Stellgliedes (13, Drossel 14) sperrt und in einer anderen Stellung öffnet.

5. Fluidgefülltes Gummilager nach Anspruch 4, dadurch gekennzeichnet, daß das Stellglied eine Drosselstelle (c) aufweist, die in einer weiteren Stellung des Stellgliedes (13) den Querschnitt der Leitung (12) verengt.

6. Fluidgefulltes Gummilager nach Anspruch 4, dadurch gekennzeichnet, daß das Stellglied eine Drossel (14) ist, die zwischen einer die Leitung (12) völlig freigebenden Stellung und einer die Leitung (12) sperrenden Stellung auf den Querschnitt der Leitung (12) verengende Zwischenstellungen einstellbar ist.

7. Fluidgefülltes Gummilager nach Anspruch 1, mit einem rohrförmigen, zum stangenförmigen inneren Lagerteil konzentrischen äußeren Lagerteil und einer Leitung, die durch einen Ringkanal zwischen der Innenseite einer inneren Buchse des Gummielements und einem äußeren Bereich des inneren Lagerteiles gebildet ist, dadurch gekennzeichnet, daß die Buchse (5″) radial elastisch ausgebildet ist und den Querschnitt des Ringkanals unter der Kraft einer die Buchse (5″) ringförmig umgebenden Druckleitung oder eines durch stromdurchflossene Spulen erzeugten Magnetfeldes verengt oder sperrt.

8. Fluidgefülltes Gummilager nach Anspruch 1, dadurch gekennzeichnet, daß in dem Hohlraum mehrere Gummielemente (4, 4′) jeweils mit Abstand nebeneinander angeordnet sind, die den Hohlraum in eine entsprechende Anzahl von Kammern unterteilen, von denen jeweils zwei benachbarte Kammern über eine Leitung verbunden sind.

9. Fluidgefülltes Gummilager nach Anspruch 1 zur Abstützung von Fahrzeugteilen, dadurch gekennzeichnet, daß die Steuereinrichtung die Elastizität des Gummilagers in Abhängigkeit von der Fahrgeschwindigkeit und/oder von der Beladung und/oder von der Belastung beim Bremsen oder Beschleunigen des Fahrzeugs verändert.

10. Fluidgefülltes Gummilager nach Anspruch 1, dadurch gekennzeichnet, daß die Gummikörper (3, 3′, 3″, 3‴) niedrigdämpfend und das Gummielement (4, 4′) hochdämpfend ausgebildet sind.

## Claims

1. A fluid-filled rubber mounting having an inner mounting part (1, 1') of rod form and an outer tubular mounting part (2, 2') which surrounds the inner mounting part (1, 1') with spacing between them, and the mounting parts (1 and 2 or 1' and 2') together with two outer rubber bodies (3 and 3' and/or 3" and 3'") arranged in axial opposition to each other enclose a cavity which is filled with a fluid and is divided by a rubber element (4, 4') connected with a mounting part (2, 2') into two chambers (6 and 6' or 6" and 6'") which are connected through a conduit (12, annular passage 15), characterised in that the elasticity of the rubber mounting is variable by a control device which blocks or frees the conduit (12, annular passage 15), while the rubber element (4, 4'), on being subjected to thrust stress on an external axial loading of a mounting part (1, 1', 2, 2'), is elastically deformed together with the rubber bodies (3 and 3', or 3" and 3'") and, in the case of a completely clear conduit (12, annular passage 15) and elastically-deformed rubber bodies (3 and 3', or 3" and 3'"), is substantially not elastically deformed.

2. A fluid-filled rubber mounting according to Claim 1, characterised in that two electrodes (mounting part 1, bush 5, ring element 7, 7') of the control device are arranged in the cavity and each one is connected with a pole of a direct current source, and the fluid is an electro-viscous fluid the viscosity of which varies in dependence upon the electric voltage of the direct-current source in such a way that the fluid cannot flow through the conduit (15) at high viscosity and can flow through it substantially without friction at low viscosity.

3. A fluid-filled rubber mounting according to Claim 1 having an outer mounting part concentric with the inner mounting part and a conduit which is formed by an annular passage between the inside of an inner bush of the rubber element and an outer region of the inner mounting part, characterised in that one electrode is formed by the inner mounting part (1) and the other electrode is formed by the bush (5) or two cylindrical ring elements (7, 7'), of which, in each case, one ring element (7, 7') is arranged in the outer region of a chamber (6, 6') adjoining the outer mounting part (2).

4. A fluid-filled rubber mounting according to claim 1, characterised in that the rubber element (4') rests in a sliding manner on the other mounting part (1') and separates the two chambers, and that, outside the rubber mounting, a setting member (13, constriction 14) is provided which blocks the conduit (12) in one position of the setting member (13, constriction 14) and opens it in another position.

5. A fluid-filled rubber mounting according to Claim 4, characterised in that the setting member comprises a constriction (c) which narrows the cross-section of the conduit (12) in a further position of the setting member (13).

6. A fluid-filled rubber mounting according to Claim 4, characterised in that the setting member is a constriction (14) which is adjustable between a position completely clearing the conduit (12) and a position blocking the conduit (12) to intermediate positions narrowing the cross-sections of the conduit (12).

7. A fluid-filled rubber mounting according to Claim 1 having a tubular outer mounting part concentric with the inner mounting part of rod form and a conduit which is formed by an annular passage between the inner side of an inner bush of the rubber element and an outer region of the inner mounting part, characterised in that the bush (5") is made radially elastic and constricts or blocks the cross-section of the annular passage under the force of a pressure conduit annularly surrounding the bush (5") or of a magnetic field produced by coils through which current flows.

8. A fluid-filled rubber mounting according to Claim 1, characterised in that several rubber elements (4, 4') are arranged side by side in the cavity with spacing between them, which elements divide the cavity into a corresponding number of chambers of which two adjacent chambers are connected by a conduit.

9. A fluid-filled rubber mounting according to claim 1 for supporting vehicle parts, characterised in that the control device modifies the elasticity of the rubber mounting in dependence upon the speed of the vehicle and/or upon the charging of the vehicle, and/or upon the loading in braking or acceleration of the vehicle.

10. A fluid-filled rubber mounting according to Claim 1, characterised in that the rubber bodies (3, 3', 3", 3'") are made to be low-damping and the rubber element (4, 4') is made to be high-damping.

**Revendications**

1. Support en caoutchouc rempli de fluide, avec une pièce support (1, 1') en forme de barre et une pièce support externe tubulaire (2, 2') entourant avec un intervalle la pièce support interne (1, 1') et les pièces supports (1 et 2, ou 1' et 2') définissent une chambre creuse avec deux corps en caoutchouc (3 et 3' ou 3" et 3'") disposé face à face axialement entre les pièces support (1 et 2 ou 1' et 2') qui est remplie d'un fluide et divisée en deux chambres (6 et 6', ou 6" et 6'") par un élément en caoutchouc (4, 4') relié à une pièce support (2, 2'), qui sont reliées par une conduite (12, canal annulaire 15), caractérisé en ce que l'élasticité du support en caoutchouc est modifiable par un dispositif de commande fermant ou ouvrant la conduit (12, canal annulaire 15), l'élément en caoutchouc (4, 4') soumis à une contrainte due à une charge externe axiale d'une pièce support (1, 1', 2, 2'), quand la conduite est obturée (12, canal annulaire 15), est déformé élastiquement avec les corps en caoutchouc (3 et 3' ou 3" et 3'") et quand la conduite (12, canal annulaire 15) est totalement libre en présence de corps en caoutchouc déformés élastiquement (3 et 3', ou 3" et 3'") il est déformé de façon presque non élastique.

2. Support en caoutchouc rempli de fluide, selon la revendication 1, caractérisé en ce qu on implante dans la chambre creuse deux électrodes (pièce support 1, douille 5, élément annulaire 7, 7') du dispositif de commande et que chacune est reliée à un pôle d'une source de courant continu et que le fluide est un liquide électrovisqueux, qui change sa viscosité en fonction de la tension de la source de courant continu, de sorte que le liquide ne puisse pas traverser la conduite (15) à haute viscosité et qu'il puisse s'y écouler presque sans frottement à faible viscosité.

3. Support en caoutchouc rempli de fluide selon la revendication 1, avec une pièce support externe concentrique à la pièce support interne et une conduite qui est formée par un canal annulaire entre la face interne d'une douille interne de l'élément en caoutchouc et un domaine externe de la pièce support externe, caractérisé en ce qu'une électrode est formée par la pièce support interne (1) et l'autre électrode par la douille (5) ou deux éléments annulaires (7, 7') cylindriques, dont chaque élément annulaire (7, 7') est disposé dans le domaine externe d'une chambre (6, 6') en contact avec la pièce support externe (2).

4. Support en caoutchouc rempli de fluide selon la revendication 1, caractérisé en ce que l'élément en caoutchouc (4') repose en glissement sur l'autre pièce support (1') et qu'il sépare les deux chambres et qu'en dehors du support en caoutchouc un élément de réglage (13, étranglement 14) est prévu, qui, dans une position de l'organe de réglage (13, étranglement 14) obture la conduite (12) et l'ouvre dans une autre position.

5. Support de caoutchouc rempli de fluide selon la revendication 4, caractérisé en ce que l'organe de réglage présente une position d'étranglement (c) qui rétrécit dans une autre position de l'organe de réglage (13) la section de la conduite (12).

6. Support en caoutchouc rempli de fluide selon la revendication 4, caractérisé en ce que l'organe de réglage est un étranglement (14) qu'on peut régler entre une position libérant totalement la conduite (12) et une position obturant totalement la conduite (12) à l'aide de positions intermédiaires rétrécissant la section de la conduite (12).

7. Support en caoutchouc selon la revendication 7, avec une pièce support externe concentrique à une pièce support interne en forme de barre et une conduite qui est formée par un canal annulaire entre la face interne d'une douille interne de l'élément en caoutchouc et un domaine externe de la pièce support interne, caractérisé en ce que la douille (5") est de constitution radialement élastique et que la section du canal annulaire peut être réduite ou obturée sous l'effet de la force exercée par une conduite de pression entourant annulairement la douille ou par un champ magnétique produit par des bobines parcourues par un courant.

8. Support en caoutchouc rempli de fluide selon la revendication 1, caractérisé en ce qu'on implante dans la chambre creuse plusieurs éléments en caoutchouc (4, 4') cote à cote avec un intervalle qui partage la chambre creuse en un nombre correspondant de chambres, deux chambres contiguës étant reliées par une conduite.

9. Support en caoutchouc selon la revendication 1 destiné à soutenir des pièces de véhicule, caractérisé en ce que le dispositif de commande modifie l'élasticité du support en caoutchouc en fonction de la vitesse du véhicule et/ou de la charge et/ou de la contrainte subie lors du freinage ou de l'accélération du véhicule.

10. Support en caoutchouc rempli de fluide selon la revendication 1, caractérisé en ce que les corps en caoutchouc (3, 3', 3", 3"') sont à faible amortissement et l'élément en caoutchouc (4, 4') a un fort amortissement.

Fig.1

Fig.2

Fig.4

Fig.5

Fig.3